# EUROPEAN PATENT SPECIFICATION

(11) **EP 2 600 601 B1**
(45) Date of publication and mention of the grant of the patent: **20.02.2019**
(21) Application number: 12190631.7
(22) Date of filing: 30.10.2012
(51) Int. Cl.: H04N 1/00, G06F 9/44

(54) **Image forming device having a plurality of platforms and method for performing application thereof**
Bilderzeugungsvorrichtung mit mehreren Plattformen und Verfahren zur Anwendungsdurchführung dafür
Dispositif de formation d'image comportant une pluralité de plates-formes et procédé pour effectuer une application de celui-ci

(30) Priority: 30.11.2011 KR 20110127365
(43) Date of publication of application: 05.06.2013
(73) Proprietor: HP Printing Korea Co., Ltd., Gyeonggi-do 16677 (KR)
(72) Inventor: Park, Hyun-cheol, Hwaseong-si (KR)
(74) Representative: Appleyard Lees IP LLP

(56) References cited:
- JP-A- 2011 182 461
- US-A1- 2003 164 862
- US-A1- 2005 231 760
- US-A1- 2006 136 912
- US-A1- 2007 008 583
- US-A1- 2009 044 004
- US-A1- 2010 037 104
- US-A1- 2011 010 642

## Description

### BACKGROUND

### 1. Field

The following description relates to an image forming device having a plurality of platforms installed therein and an application execution method thereof and, more particularly, to an image forming device providing an integrated user interface (Ul) for applications executable in each platform and an application execution method using the image forming device.

### 2. Description of the Related Art

Due to the development of electronic technologies, various kinds of electronic devices have been developed and provided. In particular, as computerization has been introduced to work places, a variety of computer peripherals are used at work.

A case in point is an image forming device. An image forming device refers to a device which forms an image on paper or other various recording media, For instance, the image forming device is realized as one of a printer, scanner, copy machine, or MFP (Multi Function Peripheral), for example.

Recently, a demand for a user-customized environment has increased in an image forming device. Accordingly, there is provided an environment where a user directly creates an application which can be employed in an image forming device and distributes it by open platforms. Therefore, an additional application may be developed to meet users' needs, separately from applications installed in a basic package at the time of purchasing products. Such applications may be supported by an additional platform, and accordingly a hybrid system having an additional platform installed therein in addition to a basic platform is being developed.

In the case of the hybrid system, there exists a plurality of platforms in one system. The platforms share various system resources, including hardware. Specifically, they can share an LCD, button, CPU, or LED, for example. Each platform provides its own UI.

Under the hybrid system, a user has to find a platform supporting an application that the user wants and select the application through a UI provided by the platform. Therefore, the user must be aware in which platform the application that the user wants is executed.

In addition, a UI provided in each platform must prepare a menu to convert the UI into a different UI.

Accordingly, usability is significantly decreased when the user employs a device. US 2010/0037104 A1 discloses an image forming apparatus that provides a basic Ul related to basic functions of the image forming apparatus, an advanced UI related to extra options, and a widget UI related to a widget program.

### SUMMARY

Additional aspects and/or advantages will be set forth in part in the description which follows and, in part, will be apparent from the description, or may be learned by practice of the invention.

According to the present invention there is provided an apparatus and method as set forth in the appended claims. Other features of the invention will be apparent from the dependent claims, and the description which follows.

Accordingly, the following description addresses above-mentioned disadvantages occurring in the prior art and other related disadvantages not described above. The following description relates to an image forming device which provides an integrated UI displaying applications of each platform and an application execution method thereof.

An image forming device may includes a storage unit having a plurality of different platforms,a UI processing unit operable to configure an integrated UI, a display unit operable to display the integrated UI and a control unit operable to execute an application selected on the integrated UI, wherein the plurality of different platforms are capable of executing different applications, wherein the integrated UI includes icons of applications executable in the plurality of different platforms, and the control unit, when one icon is selected from the integrated UI, is operable to execute an application corresponding to the selected icon by using a platform corresponding to the selected icon..

The integrated Ul is operable to be configured by using a main platform among the plurality of platforms..

In addition, forms of the icons are configurable individually according to application information of each of the plurality of different platforms.

If application information provided by the sub- platform among the plurality of platforms is an image format supportable in the main platform, the icons of applications of the sub- platform are configured based on the application information, and if the application information is an image format that is not supportable in the main platform, the icons of applications of the sub-platform are converted into icons based on an image format of the main platform and, if it the conversion is not possible, icons of applications of the sub-platform are displayed in a form of a default icon.

If a platform stored in the storage unit changes, the control unit may control the UI processing unit to update the integrated UI according to a state of the changed platform.

The storage unit may include a plurality of platform areas assigned for each of the plurality of platforms and a shared storage area storing data shared in the plurality of platforms.

The integrated UI may include a tab area displayed corresponding to the plurality of platforms and an icon display area, and the icon display area may be displayed in connection with selecting the tab area and displays icons of applications executable in a corresponding platform.

According to an exemplary embodiment, a method for executing an application of an image forming device includes displaying an integrated UI and, if an icon is selected from the integrated UI, executing an application corresponding to the selected icon, wherein the integrated UI includes icons of applications executable in a plurality of different platforms which are installed in the image forming device, and an application corresponding to the selected icon is executed by a platform corresponding to the selected icon.

The integrated UI is configured by a main platform among the plurality of platforms.

Forms of the icons are configured individually according to application information of each of the plurality of platforms.

The configuring the integrated UI includes determining whether an image format provided in the sub-platform among the plurality of platforms is an image format supportable in the main platform, and in the case of a supportable image format, configuring icons of the sub-platform according to the image format of the icon of the sub-platform and, in the case of an image format that is not supportable in the main platform, determining whether the it is possible to convert the icons into icons based on an image format of the main platform, and if the conversion is possible, converting icons of the sub-platform based on the image format of the main platform and, if it is not possible to convert into the image format, configuring application icons of the sub-platforms in a form of default icons.

If a pre-stored platform changes, the method for executing an application may further include updating the integrated UI according to a state of the changed platform.

The integrated UI may include a tab area corresponding to the plurality of platforms and an icon display area, and the icon display area may be displayed in connection with selecting the tab area and display icons of applications executable in a corresponding platform.

According to an exemplary embodiment, a method for providing an integrated UI of the image forming device includes detecting application information of another platform by a main platform among a plurality of platforms installed in the device, configuring an integrated UI displaying applications executable in the plurality of platforms according to a UI format supported in the main platform and displaying the integrated UI, wherein the integrated UI is configured by the main platform and forms of the icons are configured individually according to application information of each of the plurality of different platforms, wherein if the application information of a sub-platform among the plurality of platforms is an image format supportable in the main platform, the icons of applications of the sub-platform are configured based on the application information, and if the application information is an image format that is not supportable in the main platform, the icons of applications of the sub-platform are converted into icons based on an image format of the main platform, and if the conversion is not possible, the icons of applications of the sub-platform are displayed in a form of default icons.

In accordance with the exemplary embodiments as described above, a user can easily select a desired application using an integrated UI, resulting in an immediate conversion of platforms and an increase in convenience.

### BRIEF DESCRIPTION OF THE DRAWINGS

The above and other features, aspects and advantages of the present invention will be more apparent from the following detailed description taken in conjunction with the accompanying drawings, in which:
FIG. 1 is a block diagram illustrating an image forming device according to an exemplary embodiment;
FIG. 2 is a view illustrating an example of the configuration of an integrated UI;
FIG. 3 is a view illustrating an example of a configuration of platform according to an exemplary embodiment;
FIG. 4 is a view illustrating another example of the configuration of an integrated UI;
FIG. 5 is a flowchart illustrating an application execution method according to an exemplary embodiment; and
FIG. 6 is a flowchart illustrating a method of providing an integrated UI, according to an exemplary embodiment.

### DETAILED DESCRIPTION

Hereinafter, exemplary embodiments will be described in greater detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail because they would obscure the exemplary embodiments with unnecessary detail.

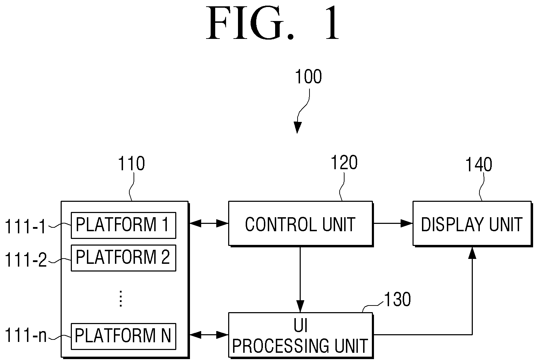

FIG. 1 is a block diagram to explain a configuration of an image forming device according to an exemplary embodiment. Referring to FIG. 1, an image forming device 100 comprises a storage unit 110, a control unit 120, a user interface (Ul) processing unit 130, and a display unit 140.

In the storage unit 110, a plurality of platforms 111-1, 111-2 ... 111-n are installed. The term "platform" indicates a software system in which to execute an application. Various platforms such as a Java 2 Micro Edition (J2ME) platform and a Java 2 Standard Edition (J2SE) platform, for example, may be used as the platforms 111-1, 111-2 ... 111-n.

Each platform may perform at least one application. For instance, an application written in C/C++ and a JAVA platform having a JVM (Java Virtual Machine) may be stored in the storage unit 110. These platforms may be installed on the same operating system (OS) or on separate OSs.

The control unit 120 may use a platform stored in the storage unit 110 and perform an application provided by the platform. In this way, an application may perform various functions in the image forming device 100. That is, not only basic functions such as printing, scanning, or copying, for example, but also various other functions such as scan-to-email, scan-to-fax, web browsing, webpage printing, or data downloading and uploading, for example, may be performed. These functions may be realized in various manners, other than those set forth herein, according to the type of application.

The UI processing unit 130 composes an integrated UI displaying all applications executable on each platform. The integrated UI may display information on applications supported by each platform.

The display unit 140 displays the integrated UI provided by the UI processing unit 130 on a screen.

The control unit 120 may control the display unit 140 to display the integrated UI when a certain event occurs. For example, the certain event may include cases when the image forming device 100 is turned on or reset, when a user selects a menu for displaying an integrated UI, or when an image forming job is complete, for example.

A user may select a desired application from the integrated UI.If an application is selected from the integrated UI, the control unit 120 executes the selected application by using a platform corresponding to the selected platform. Accordingly, a function requested by the user is provided.

The UI processing unit 130 composes the integrated UI by using a main platform among a plurality of platforms 111-1, 111-2 ... 111-n.

The UI processing unit 130 arranges icons corresponding to applications of the other platforms, i.e., sub-platforms, within a UI layout provided by the main platform. The icon and type of each application may be checked from application information provided by the sub-platforms. Accordingly, the type and shape of each icon may be configured based on application information of each platform.

If the UI processing unit 130 composes an integrated UI by using the main platform, application information provided by the sub-platforms may include icons having an image format that is not supported by the main platform. In this case, the Ul processing unit 130 converts the icons having the non-supported image format into an image format supported by the main platform and displays the corresponding icons on the integrated UI.

If the conversion of the icons having the non-supported image format into the supported image format is impossible, the Ul processing unit 130 configures the icons having the non-supported image format as default icons.

On the other hand, if the application information provided by the sub-platforms is in the image format supported by the main platform, the UI processing unit 130 configures the icons of the sub-platforms based on the application information provided by the sub-platforms.

Information on the integrated UI generated by the UI processing unit 130 is stored in the storage unit 110. The control unit 120 may control the display unit 140 to read out the information on the integrated UI from the storage unit 110 and to display the read-out information upon the occurrence of the above-described event.

Meanwhile, if the platforms stored In the storage unit 110 change, the control unit 120 may control the UI processing unit 130 to update the integrated Ul according to changes in the state of the platforms. Accordingly, the integrated UI may be updated to reflect an up-to-date state of the platforms.

As illustrated in FIG. 1, the storage unit 110 may be realized as a memory which is divided into a plurality of sections in which to store a plurality of platforms or as a plurality of memories in which to store a plurality of platforms. In addition, the storage unit 110 may include a shared storage area for storing data shared between a plurality of platforms.

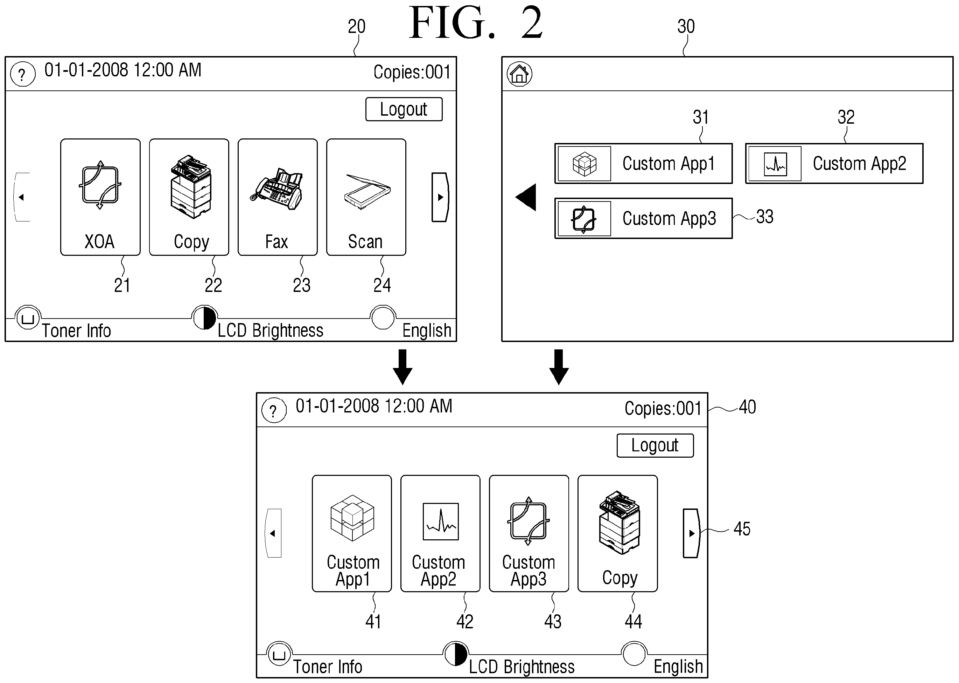

FIG. 2 is a view illustrating an example of the configuration of an integrated UI according to an exemplary embodiment.

Referring to FIG. 2, individual Uls 20 and 30 provided by different platforms may have different layouts and may display different shapes of icons for different applications provided. The image forming device 100 configures an integrated UI 40 based on application information of each platform. The application information includes the names and icon images of applications and a list of the applications. The integrated UI 40 may maintain the same UI layout and the same shapes of icons as a main platform, for example, the platform corresponding to the UI 20, and display icons for applications displayed in the UI 30, with reference to application information of each platform.

Meanwhile, the main platform may be set by a default setting or a user setting. In a case in which the main platform is set by a user setting, the main platform may be replaced with another platform selected by the user as a new main platform. In this case, the control unit 120 may control the UI processing unit 130 to configure a new integrated UI according to an individual UI of the new main platform.

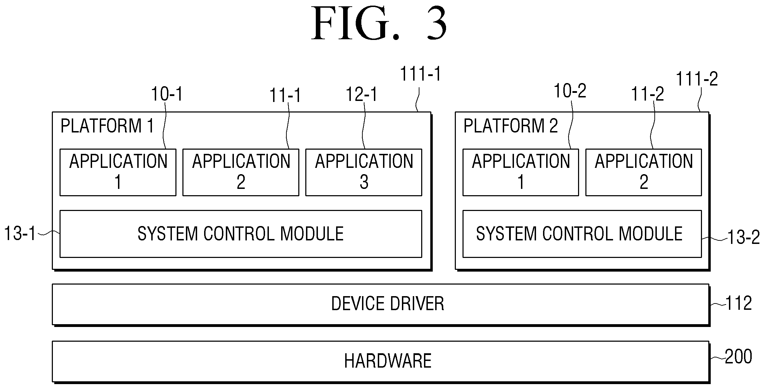

FIG. 3 is a block diagram illustrating an image forming device according to an exemplary embodiment. In FIG. 3, only two platforms 111-1 and 111-2 are illustrated for convenience, but there is no restriction to the number of platforms that may be included in the image forming device 100.

Referring to FIG. 3, the image forming device 100 may include a plurality of first and second platforms 111-1 and 111-2, a device driver 112, and hardware 200. The first and second platforms 111-1 and 111-2 and the device driver 112 may be stored in the storage unit 110. The hardware 200 refers to hardware elements which are operated by the first and second platforms 111-1 and 111-2 stored in the storage unit 110. For example, the hardware 200 may include various kinds of elements which may be used in the display unit 140 such as a button, a speaker, a buzzer, a light-emitting diode (LED), a network communication card, or other image forming operations, for example.

Referring to FIG. 3, the first platform 111-1 provides three applications (i.e., first, second, and third applications 10-1, 11-1, and 12-1), and the second platform 111-2 provides two applications (i.e., first and second applications 10-2 and 11-2). The first and second platforms 111-1 and 111-2 include first and second system control modules 13-1 and 13-2, respectively. The first and second system control modules 13-1 and 13-2 may be realized as software. The control unit 120 of FIG. 1 may perform the above-described operations by implementing the first and second system control modules 13-1 and 13-2.

Specifically, the first and second system control modules 13-1 and 13-2 control the UI processing unit 130 to display a screen which includes various information relating to UI menu configuration, a status of operation, a state of hardware, or an error state, for example. Each of the first and second system control modules 13-1 and 13-2 may operate the hardware 200 via the device driver 112.

If the first platform 111-1 is a main platform, the first system control module 13-1 acquires application information via the second platform 111-2. The first system control module 13-1 may configure an integrated application list by combining its application list with an application list included in the acquired application information. The first system control module 13-1 may configure an integrated UI including the icons of all applications included in the integrated application list, and may store the integrated UI.

The first system control module 13-1 provides the integrated UI to the display unit 140 via the device driver 112. The display unit 140 displays the integrated UI using a displaying element, such as a liquid crystal display (LCD), for example.

If a user selects the first application 10-2 of the second platform 111-2 from the integrated UI, the system control module 13-1 assigns the authority for the control of the hardware 200 to the second system control module 13-2. As described above, the control authority may be transferred between the first and second platforms 111-1 and 111-2, and one of the first and second platforms 111-1 and 111-2 having the control authority may perform various functions by controlling the hardware 200. The first system control module 13-1 and the second system control module 13-2 may include a screen configuring module (not illustrated) for configuring an integrated UI, a display control module (not illustrated) for displaying a UI, a communication module (not illustrated) for communicating with other platforms, and a storage control module for controlling a storing operation.

The storage control module may store information on an image message necessary for configuring a screen, application information generated by other platforms, icon images, and a set value indicating whether a corresponding platform is set as a main platform or a sub-platform.

The first and second platforms 111-1 and 111-2 may share the storage unit 110 or have their own storage units. If the first and second platforms 111-1 and 111-2 share the storage unit 110, the first and second platforms 111-1 and 111-2 may configure an integrated UI by storing application information in the shared storage area in the storage unit 110 and sharing the application information without the need to exchange the application information.

As illustrated in FIG. 2, an integrated UI may be configured to display all applications provided by all platforms available at the same time on the same screen or to display applications on a platform-by-platform basis by using tabs.

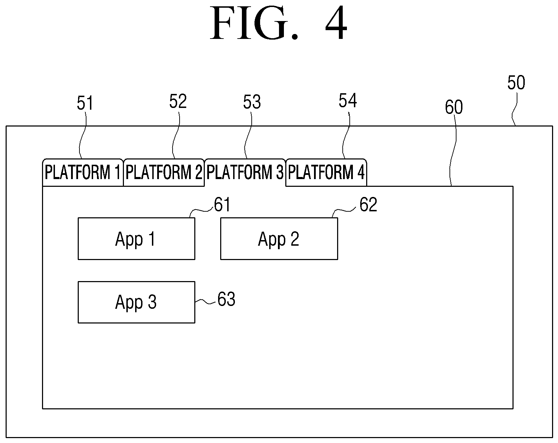

FIG. 4 illustrates an example of an integrated UI which displays applications on a platform-by-platform basis.

Referring to FIG. 4, an integrated UI 50 includes first, second, third, and fourth tab areas 51, 52, 53, and 54 respectively corresponding to platforms 1, 2, 3, and 4 and an icon display area 60 which may display one or more application icons in response to the selection of one of the first, second, third, and fourth tab areas 51, 52, 53, and 54. For example, in response to the selection of the third tab area 53, icons 61, 62, and 63 of applications 1, 2, and 3 that are executable on platform 3 corresponding to the tab area 53 may be displayed in the icon display area 60.

A user may select a desired platform from among platforms 1, 2, 3, and 4 by selecting one of the first, second, third, and fourth tab areas 51, 52, 53, and 54, and may select a desired application icon from the icon displaying area 60 where one or more application icons corresponding to the selected desired platform are displayed.

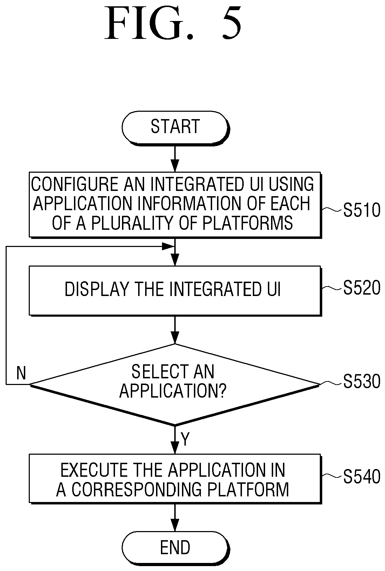

FIG. 5 is a flowchart illustrating an application executing method according to an exemplary embodiment.

Referring to FIG. 5, in operation S510, an image forming device may configure an integrated UI using application information of a plurality of previously-installed platforms. Information on the integrated UI is stored. In operation S520, the image forming device displays the stored integrated UI.

The image forming device 100 may update the integrated UI if there is any change in the platforms or the applications provided by the platforms.

In operation S530, a user may select a desired application from the integrated UI. In operation S540, the image forming device performs the selected application by using a platform that supports the selected application.

That is, if the platform that supports the selected application is a sub-platform, a main platform assigns a control authority to the sub-platform, and the sub-platform performs the selected application and displays an execution screen relevant to the application via the display unit 140.

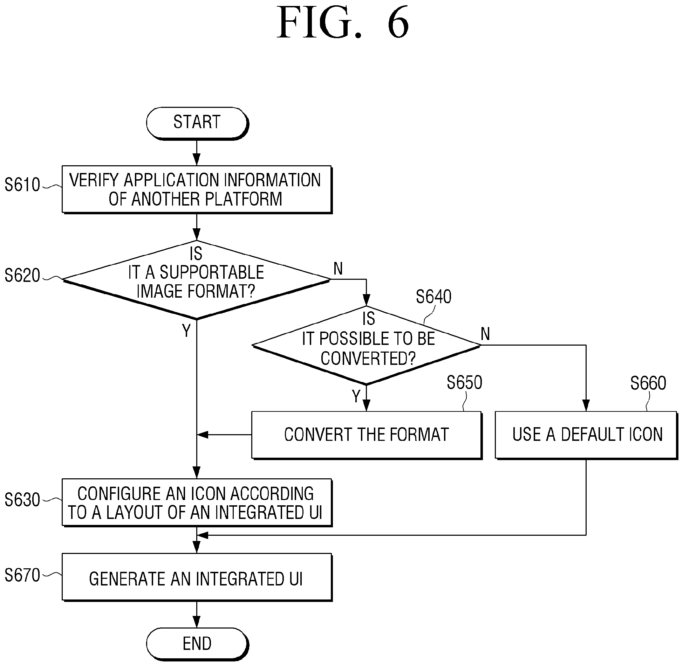

FIG. 6 is a flowchart illustrating a method of configuring an integrated UI, according to an exemplary embodiment. Referring to FIG. 6, in operation S610, a main platform of an image forming device may check application information on applications provided by other platforms. The application information may include a list of applications, the button images or icon images of the applications, button captions or icon captions of the applications, or unique information, for example, which needs to be transferred in response to the receipt of a user's request for the execution of an application.

A sub-platform may be provided, in addition to the main platform, with the application information, if necessary.

The application information may be transmitted or received directly between platforms. However, if a shared storage area is provided, the application information may be stored in the shared storage area, and location or path information of the location where the application information is stored may be transmitted between platforms.

A platform may be set as a main platform or a sub-platform by a user setting or a default setting. Each platform may determine whether they are main platforms or sub-platforms based on a set value present in the storage unit 110.

In operation S610, the application information is checked. In operation S620, whether button images or icon images included in the application information have an image format supported by the main platform is checked. For instance, if the main platform only supports JPEG images and application icon images to be displayed are PNG images, the main platform may determine that the application icon images to be displayed have an image format that is not supported by the main platform. Alternatively, if the application icon images to be displayed are JPEG images, the main platform may determine that the application icon images to be displayed have an image format that is supported by the main platform.

In operation S630, if icons included in the application information are determined to have an image format supported by the main platform, the icons may be arranged in an integrated UI layout as they are in the application information. In operation S670, an integrated UI may be configured by adjusting the size of the icons and the length and the font size of captions displayed in the icons in accordance with the size or shape of the integrated UI layout.

Meanwhile, in operation S640, if the application information includes an image having an image format not supported by the main platform, the main platform determines whether it can perform the conversion of the image. For example, the main platform may determine whether it has an image conversion module. If the main platform does not have an image conversion module, the main platform may request a sub-platform equipped with an image conversion module to convert the image and provide the converted image.

In operation S650, if the main platform is determined to be able to convert the image in operation S640, the main platform converts the format of the image, and arranges the converted image in the integrated Ul layout. In this manner, in operation S670, an integrated UI may be generated.

On the other hand, in operation S650, if the main platform is determined to be able to convert the image, the main platform may use a default icon in operation S660 and may generate an integrated UI in operation S670.

If a user selects an application supported by a sub-platform from the integrated UI, the main platform transmits unique identification information for checking the selected application such as an application execution request including an identifier (ID) of the selected application, for example, to the sub-platform. The main platform transfers a control authority over a screen and UI hardware to the sub-platform. Accordingly, the sub-platform may execute the selected application.

The above-described exemplary embodiments illustrate cases where a main platform composes an integrated UI.

Icon forms of an integrated UI are configured individually according to application information of each of a plurality of platforms. That is, an application icon displayed on an individual UI of a main platform and an application icon displayed on an individual UI of a sub-platform may be displayed on the integrated UI with an icon form displayed on each UI.

If a pre-stored platform changes, updating the integrated UI according to a state of the changed platform may be further included even though FIGS. 5 and 6 do not illustrate such a case.

In addition, the above-described exemplary embodiments describes based on the image forming device 100, but in other examples, not within the scope of the invention as claimed, the methods for displaying an integrated UI and executing an application may be applied to various types of devices as well as the image forming device. That is, it may be applied to displaying devices installing a plurality of platforms therein, such as a TV, mobile phone, PC, laptop, tablet PC, PDA, or electronic photo frame, for example.

In addition, a program to perform the methods for displaying an integrated UI and executing an application may be provided separately and recorded in a recording medium. A device installing the recording medium therein may perform the method for displaying an integrated UI and executing an application by executing a corresponding program.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts, Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image forming device, comprising:
a storage unit (110) having a plurality of different platforms (111-1...111-n);
a UI processing unit (130) operable to configure an integrated UI
a display unit (140) operable to display the integrated UI; and
a control unit (120) operable to execute an application selected on the integrated UI,
wherein the plurality of different platforms (111-1...111-n) are capable of executing different applications,
**characterized in that** the integrated UI includes icons of applications executable in the plurality of different platforms (111-1...111-n), and the control unit (120), when one icon is selected from the integrated UI, is operable to execute an application corresponding to the selected icon by using a platform (111-1...111-n) corresponding to the selected icon,
wherein the integrated UI is operable to be configured by using a main platform among the plurality of platforms, and forms of the icons are configurable individually according to application information of each of the plurality of different platforms,
wherein if the application information of a sub-platform among the plurality of platforms is an image format supportable in the main platform, the icons of applications of the sub-platform are configured based on the application information, and if the application information is an image format that is not supportable in the main platform, the icons of applications of the sub-platform are converted into icons based on an image format of the main platform and, if the conversion is not possible, the icons of applications of the sub-platform are displayed in a form of default icons.

2. The device as claimed in claim 1, wherein the control unit is operable to update the integrated UI according to a state of the changed platform, if a platform stored in the storage unit changes.

3. The device as claimed in claim 1, wherein the storage unit comprises a plurality of platform areas assigned for each of the plurality of platforms and a shared storage area storing data shared in the plurality of platforms.

4. The device as claimed in claim 1, wherein the integrated UI includes a tab area displayed corresponding to the plurality of platforms and an icon display area and the icon display area is displayed in connection with selecting the tab area and is operable to display icons of applications executable in a corresponding platform.

5. A method for executing an application of an image forming device, the method comprising;
displaying an integrated UI; and
if an icon is selected from the integrated UI, executing an application corresponding to the selected icon;
**characterised in that** the integrated UI includes icons of applications executable in a plurality of different platforms which are installed in the image forming device, and an application corresponding to the selected icon is executed by a platform corresponding to the selected icon,
wherein the integrated Ul is configured by a main platform among the plurality of different platforms and forms of the icons are configured individually according to application information of each of the plurality of different platforms,
and wherein the configuring the integrated Ul comprises:
determining whether an image format of an icon provided in the sub-platform among the plurality of platforms is an image format supportable in the main platform;
in the case of a supportable image format, configuring icons of the sub-platform according to the image format of the icon of the sub-platform and, in the case of an image format that is not supportable in the main platform, determining whether it is possible to convert the icons into icons based on an image format of the main platform; and
if the conversion is possible, configuring application icons of the sub-platform based on the image format of the main platform and, if it is not possible to convert into the image format, configuring application icons of the sub-platforms in a form of default icons.

6. The method as claimed in claim 5, further comprising:
if a pre-stored platform changes, updating the integrated UI according to a state of the changed platform.

7. The method as claimed in claim 5, wherein the integrated UI includes a tab area corresponding to the plurality of platforms and an icon display area and the icon display area is displayed in connection with selecting the tab area and displays icons of applications executable in a corresponding platform.

8. A method for providing an integrated UI an image forming device, the method comprising:
detecting application information of another platform by a main platform among a plurality of different platforms installed in the device;
**characterized by** configuring an integrated UI displaying applications executable in the plurality of different platforms according to a Ul format provided in the main platform; and
displaying the integrated Ul
wherein the integrated UI is configured by the main platform among the plurality of different platforms and forms of the icons are configured individually according to application information of each of the plurality of different platforms,
wherein the integrated UI is operable to be configured by using a main platform among the plurality of platforms, and forms of the icons are configurable Individually according to application information of each of the plurality of different platforms,
wherein if the application information of a sub-platform among the plurality of platforms is an image format supportable in the main platform, the icons of applications of the sub-platform are configured based on the application information, and if the application information is an image format that is not supportable in the main platform, the icons of applications of the sub-platform are converted into icons based on an image format of the main platform and, if the conversion is not possible, the icons of applications of the sub-platform are displayed in a form of default icons.

## Patentansprüche

1. Bilderzeugungsvorrichtung, umfassend:
eine Speichereinheit (110), welche mehrere unterschiedliche Plattformen (111-1....111-n) aufweist;
eine Benutzeroberfläche-Verarbeitungseinheit (130), welche betreibbar ist, um eine integrierte Benutzeroberfläche zu konfigurieren,
eine Anzeigeeinheit (140), welche betreibbar ist, um die integrierte Benutzeroberfläche anzuzeigen; und
eine Steuereinheit (120), welche betreibbar ist, um eine Anwendung auszuführen, welche auf der integrierten Benutzeroberfläche ausgewählt wird,
wobei die mehreren unterschiedlichen Plattformen (111-1...111-n) in der Lage sind, unterschiedliche Anwendungen auszuführen,
**dadurch gekennzeichnet, dass** die integrierte Benutzeroberfläche Symbole von Anwendungen umfasst, welche in den mehreren unterschiedlichen Plattformen (111-1....111-n) ausführbar sind, und die Steuereinheit (120), wenn ein Symbol aus der integrierten Benutzeroberfläche ausgewählt wird, betreibbar ist, um eine Anwendung auszuführen, welche dem ausgewählten Symbol entspricht, indem sie eine Plattform (111-1...111-n) verwendet, welche dem ausgewählten Symbol entspricht,
wobei die integrierte Benutzeroberfläche betreibbar ist, um durch Verwenden einer Hauptplattform der mehreren Plattformen konfiguriert zu werden, und wobei Formen der Symbole gemäß den Anwendungsinformationen jeder der mehreren unterschiedlichen Plattformen individuell konfigurierbar sind,
wobei, falls die Anwendungsinformationen einer Unterplattform der mehreren Plattformen ein in der Hauptplattform unterstützbares Bildformat umfassen, die Symbole der Anwendungen der Unterplattform auf der Basis der Anwendungsinformationen konfiguriert werden, und, falls die Anwendungsinformationen ein Bildformat umfassen, welches in der Hauptplattform nicht unterstützbar ist, die Symbole der Anwendungen der Unterplattform in Symbole auf der Basis eines Bildformats der Hauptplattform umgewandelt werden und, falls die Umwandlung nicht möglich ist, die Symbole der Anwendungen der Unterplattform in einer Form von Standardsymbolen angezeigt werden.

2. Vorrichtung nach Anspruch 1, wobei die Steuereinheit betreibbar ist, um die integrierte Benutzeroberfläche gemäß einem Zustand der veränderten Plattform zu aktualisieren, falls sich eine in der Speichereinheit gespeicherte Plattform verändert.

3. Vorrichtung nach Anspruch 1, wobei die Speichereinheit mehrere Plattformbereiche, welche für jede der mehreren Plattformen zugewiesen werden, und einen gemeinsamen Speicherbereich umfasst, welcher Daten speichert, die in den mehreren Plattformen gemeinsam genutzt werden.

4. Vorrichtung nach Anspruch 1, wobei die integrierte Benutzeroberfläche einen Registerkartenbereich, welcher entsprechend der mehreren Plattformen angezeigt wird, und einen Symbolanzeigebereich umfasst, und wobei der Symbolanzeigebereich in Verbindung mit der Auswahl des Registerkartenbereichs angezeigt wird und betreibbar ist, um Symbole von Anwendungen anzuzeigen, welche in einer entsprechenden Plattform ausführbar sind.

5. Verfahren zum Ausführen einer Anwendung einer Bilderzeugungsvorrichtung, wobei das Verfahren umfasst:
Anzeigen einer integrierten Benutzeroberfläche; und
falls ein Symbol aus der integrierten Benutzeroberfläche ausgewählt wird, Ausführen einer Anwendung, welcher dem ausgewählten Symbol entspricht;
**dadurch gekennzeichnet, dass** die integrierte Benutzeroberfläche Symbole von Anwendungen umfasst, welche in mehreren unterschiedlichen Plattformen ausführbar sind, welche in der Bilderzeugungsvorrichtung installiert sind, und eine Anwendung, welche dem ausgewählten Symbol entspricht, durch eine Plattform ausgeführt wird, welche dem ausgewählten Symbol entspricht,
wobei die integrierte Benutzeroberfläche durch eine Hauptplattform der mehreren unterschiedlichen Plattformen konfiguriert wird und wobei Formen der Symbole gemäß der Anwendungsinformationen jeder der mehreren unterschiedlichen Plattformen individuell konfiguriert sind,
und wobei das Konfigurieren der integrierten Benutzeroberfläche umfasst:
Bestimmen, ob ein Bildformat eines in der Unterplattform bereitgestellten Symbols der mehreren Plattformen ein Bildformat ist, welches in der Hauptplattform unterstützbar ist;
im Falle eines unterstützbaren Bildformats, Konfigurieren von Symbolen der Unterplattform gemäß dem Bildformat des Symbols der Unterplattform und, im Falle eines Bildformats, welches von der Hauptplattform nicht unterstützbar ist, Bestimmen, ob es möglich ist, die Symbole in Symbole auf der Basis eines Bildformats der Hauptplattform umzuwandeln; und
falls die Umwandlung möglich ist, Konfigurieren von Anwendungssymbolen der Unterplattform auf der Basis des Bildformats der Hauptplattform und, falls es nicht möglich ist, in das Bildformat umzuwandeln, Konfigurieren von Anwendungssymbolen der Unterplattformen in einer Form von Standardsymbolen.

6. Verfahren nach Anspruch 5, ferner umfassend:
falls sich eine vorab gespeicherte Plattform verändert, Aktualisieren der integrierten Benutzeroberfläche gemäß einem Zustand der veränderten Plattform.

7. Verfahren nach Anspruch 5, wobei die integrierte Benutzeroberfläche einen Registerkartenbereich, welcher den mehreren Plattformen entspricht, und einen Symbolanzeigebereich umfasst, und wobei der Symbolanzeigebereich in Verbindung mit der Auswahl des Registerkartenbereichs angezeigt wird und Symbole von Anwendungen anzeigt, welche in einer entsprechenden Plattform ausführbar sind.

8. Verfahren zum Bereitstellen einer integrierten Benutzeroberfläche einer Bilderzeugungsvorrichtung, wobei das Verfahren umfasst:
Erfassen von Anwendungsinformationen einer anderen Plattform durch eine Hauptplattform von mehreren unterschiedlichen Plattformen, welche in der Vorrichtung installiert sind;
**gekennzeichnet durch** das Konfigurieren einer integrierten Benutzeroberfläche, welche gemäß einem Benutzeroberfläche-Format, welches in der Hauptplattform bereitgestellt ist, Anwendungen anzeigt, welche in den mehreren unterschiedlichen Plattformen ausführbar sind; und
Anzeigen der integrierten Benutzeroberfläche
wobei die integrierte Benutzeroberfläche durch die Hauptplattform der mehreren unterschiedlichen Plattformen konfiguriert wird und wobei Formen der Symbole gemäß Anwendungsinformationen jeder der mehreren unterschiedlichen Plattformen individuell konfiguriert werden,
wobei die integrierte Benutzeroberfläche betreibbar ist, um durch Verwenden einer Hauptplattform der mehreren Plattformen konfiguriert zu werden, und wobei Formen der Symbole gemäß Anwendungsinformationen jeder der mehreren unterschiedlichen Plattformen individuell konfigurierbar sind,
wobei, falls die Anwendungsinformationen einer Unterplattform der mehreren Plattformen ein in der Hauptplattform unterstützbares Bildformat umfassen, die Symbole von Anwendungen der Unterplattform auf der Basis der Anwendungsinformationen konfiguriert werden, und, falls die Anwendungsinformationen ein Bildformat umfassen, welches in der Hauptplattform nicht unterstützbar ist, die Symbole von Anwendungen der Unterplattform in Symbole auf der Basis eines Bildformats der Hauptplattform umgewandelt werden und, falls die Umwandlung nicht möglich ist, die Symbole von Anwendungen der Unterplattform in einer Form von Standardsymbolen angezeigt werden.

## Revendications

1. Dispositif de formation d'image, comprenant :
une unité de stockage (110) présentant une pluralité de plateformes différentes (111-1...111-n);
une unité de traitement d'interface utilisateur (130) actionnable pour configurer une interface utilisateur intégrée ;
une unité d'affichage (140) actionnable pour afficher l'interface utilisateur intégrée ; et
une unité de commande (120) actionnable pour exécuter une application sélectionnée sur l'interface utilisateur intégrée,
la pluralité de plateformes différentes (111-1...111-n) étant capable d'exécuter des applications différentes,
**caractérisé en ce que** l'interface utilisateur intégrée inclut des icônes d'applications exécutables dans la pluralité de plateformes différentes (111-1...111-n), et que l'unité de commande (120), lorsqu'une icône est sélectionnée à partir de l'interface utilisateur intégrée, est actionnable pour exécuter une application correspondant à l'icône sélectionnée à l'aide d'une plateforme (111-1...111-n) correspondant à l'icône sélectionnée,
l'interface utilisateur intégrée étant actionnable pour être configurée à l'aide d'une plateforme principale parmi la pluralité de plateformes, et les formes des icônes pouvant être configurées individuellement en fonction d'informations d'application de chacune de la pluralité de plateformes différentes,
les icônes d'application de la sous-plateforme étant configurées sur la base des informations d'application si les informations d'application d'une sous-plateforme parmi la pluralité de plateformes sont un format d'image supportable dans la plateforme principale, et les icônes d'applications de la sous-plateforme étant converties en icônes sur la base d'un format d'image de la plateforme principale si les informations d'application sont un format d'image qui n'est pas supportable dans la plateforme principale, et les icônes d'applications de la sous-plateforme étant affichées sous forme d'icônes par défaut si la conversion n'est pas possible.

2. Dispositif selon la revendication 1, dans lequel l'unité de commande est actionnable pour mettre à jour l'interface utilisateur intégrée en fonction d'un état de la plateforme modifiée, si une plateforme stockée dans l'unité de stockage est modifiée.

3. Dispositif selon la revendication 1, dans lequel l'unité de stockage comprend une pluralité de zones de plateforme attribuées à chacune de la pluralité de plateformes et une zone de stockage partagée stockant des données partagées dans la pluralité de plateformes.

4. Dispositif selon la revendication 1, dans lequel l'interface utilisateur intégrée inclut une zone d'onglets affichée correspondant à la pluralité de plateformes et une zone d'affichage d'icônes et la zone d'affichage d'icônes est affichée en liaison avec la sélection de la zone d'onglets et est actionnable pour afficher des icônes d'applications exécutables dans une plateforme correspondante.

5. Procédé d'exécution d'une application d'un dispositif de formation d'image, le procédé comprenant :
l'affichage d'une interface utilisateur intégrée ; et
si une icône est sélectionnée à partir de l'interface utilisateur intégrée, l'exécution d'une application correspondant à l'icône sélectionnée ;
**caractérisé en ce que** l'interface utilisateur intégrée inclut des icônes d'applications exécutables dans une pluralité de plateformes différentes installées dans le dispositif de formation d'image, et qu'une application correspondant à l'icône sélectionnée est exécutée par une plateforme correspondant à l'icône sélectionnée,
l'interface utilisateur intégrée étant configurée par une plateforme principale parmi la pluralité de plateformes différentes et les formes des icônes étant configurées individuellement en fonction d'informations d'application de chacune de la pluralité de plateformes différentes,
et la configuration de l'interface utilisateur intégrée comprenant :
le fait de déterminer si un format d'image d'une icône fournie dans la sous-plateforme parmi la pluralité de plateformes est un format d'image supportable dans la plateforme principale ;
dans le cas d'un format d'image supportable, la configuration des icônes de la sous-plateforme en fonction du format d'image de l'icône de la sous-plateforme et, dans le cas d'un format d'image qui n'est pas supportable dans la plateforme principale, le fait de déterminer s'il est possible de convertir les icônes en icônes basées sur un format d'image de la plateforme principale ; et
si la conversion est possible, la configuration des icônes d'application de la sous-plateforme sur la base du format d'image de la plateforme principale et, s'il n'est pas possible de convertir dans le format d'image, la configuration des icônes d'application des sous-plateformes sous forme d'icônes par défaut.

6. Procédé selon la revendication 5, comprenant en outre :
si une plateforme pré-stockée est modifiée, la mise à jour de l'interface utilisateur intégrée en fonction d'un état de la plateforme modifiée.

7. Procédé selon la revendication 5, dans lequel l'interface utilisateur intégrée inclut une zone d'onglets correspondant à la pluralité de plateformes et une zone d'affichage d'icônes et la zone d'affichage d'icônes est affichée en relation avec la sélection de la zone d'onglets et affiche des icônes d'applications exécutables dans une plateforme correspondante.

8. Procédé de fourniture d'une interface utilisateur intégrée d'un dispositif de formation d'image, le procédé comprenant :
la détection d'informations d'application d'une autre plateforme par une plateforme principale parmi une pluralité de plateformes différentes installées dans le dispositif ;
**caractérisé par** la configuration d'une interface utilisateur intégrée affichant des applications exécutables dans la pluralité de plateformes différentes selon un format d'interface utilisateur fourni dans la plateforme principale ; et
l'affichage de l'interface utilisateur intégrée
l'interface utilisateur intégrée étant configurée par la plateforme principale parmi la pluralité de plateformes différentes et les formes des icônes étant configurées individuellement en fonction d'informations d'application de chacune de la pluralité de plateformes différentes,
l'interface utilisateur intégrée étant actionnable pour être configurée à l'aide d'une plateforme principale parmi la pluralité de plateformes, et les formes des icônes pouvant être configurées individuellement en fonction d'informations d'application de chacune de la pluralité de plateformes différentes,
les icônes d'applications de la sous-plateforme étant configurées sur la base des informations d'application si les informations d'application d'une sous-plateforme parmi la pluralité de plateformes sont un format d'image supportable dans la plateforme principale, et les icônes d'applications de la sous-plateforme étant converties en icônes sur la base d'un format d'image de la plateforme principale si les informations d'application sont un format d'image qui n'est pas supportable dans la plateforme principale, et les icônes d'applications de la sous-plateforme étant affichées sous forme d'icônes par défaut si la conversion n'est pas possible.
